(19) Europäisches Patentamt
European Patent Office
Office européen des brevets

(11) **EP 1 921 878 B1**

(12) **FASCICULE DE BREVET EUROPEEN**

(45) Date de publication et mention de la délivrance du brevet:
**22.08.2018 Bulletin 2018/34**

(51) Int Cl.:
***H04W 16/18*** *(2009.01)* *H04W 16/22* *(2009.01)*
*H04W 28/16* *(2009.01)*

(21) Numéro de dépôt: **07119348.6**

(22) Date de dépôt: **26.10.2007**

(54) **Allocation de bandes de fréquence à des systèmes de radiocommunications**

Zuteilung von Frequenzbereichen für Funksysteme

Allocation of frequency bands to radio communication systems

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.11.2006 FR 0654766**

(43) Date de publication de la demande:
**14.05.2008 Bulletin 2008/20**

(73) Titulaire: **Orange**
**75015 Paris (FR)**

(72) Inventeurs:
- **Houze, Paul**
**94200, IVRY SUR SEINE (FR)**
- **Ben Jemaa, Sana**
**92130, ISSY LES MOULINEAUX (FR)**

(74) Mandataire: **Regimbeau**
**20, rue de Chazelles**
**75847 Paris Cedex 17 (FR)**

(56) Documents cités:
**EP-A- 0 847 213**
**EP-A- 0 928 121**
**WO-A-94/28650**
**WO-A-2005/104602**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne une allocation de bandes de fréquence à des systèmes de radiocommunications, tels que des réseaux de radiocommunications cellulaires, des réseaux locaux sans fil ou des réseaux de diffusion (par exemple diffusion hertzienne de signaux de télévision).

Généralement, des bandes de fréquence sont allouées à des systèmes de radiocommunications de manière fixe, afin de limiter des interférences entre les différents systèmes de radiocommunications.

Des bandes de fréquence peuvent être également allouées à des systèmes de radiocommunications de manière dynamique, en fonction de l'espace et/ou du temps. Par exemple, une allocation de bande de fréquence est adaptée dynamiquement à l'évolution des besoins en spectre d'un système de radiocommunications couvrant une agglomération qui requiert une bande de fréquence plus large en fin de semaine qu'en début de semaine.

Certains systèmes de radiocommunications peuvent utiliser des fréquences variant dans une ou plusieurs bandes de fréquence, afin de ne pas causer d'interférences au sein d'un même système de radiocommunications, ou aux autres systèmes de radiocommunications partageant une ou des bandes de fréquence communes. Cependant, il est difficile de prévoir des interférences entre deux systèmes de radiocommunications quelconques dont les besoins en spectre peuvent varier. Le document EP0847213 montre un procédé pour allouer des fréquences à un système de communication. Dans l'état de la technique, il n'existe pas de procédé général pour allouer de manière statique ou dynamique des bandes de fréquence à des systèmes de radiocommunications en nombre quelconque afin de garantir un minimum d'interférences entre les systèmes de radiocommunications.

Pour remédier à ces inconvénients, un procédé selon l'invention pour allouer des bandes de fréquence respectivement à des systèmes de radiocommunications, est caractérisé en ce qu'il comprend :

une modélisation d'une allocation d'une bande de fréquence à chaque système de radiocommunications par au moins un bloc tridimensionnel en fonction d'une largeur de bande de fréquence et d'une zone de couverture du système de radiocommunications,
une détermination d'au moins une répartition des blocs modélisés,
une attribution d'un premier score à chaque répartition de blocs en fonction d'une bande de fréquence minimale incluant toutes les bandes de fréquence des blocs de la répartition, et
une adoption d'une répartition de blocs ayant un premier score supérieur à un seuil afin d'allouer des bandes de fréquence aux systèmes de radiocommunications selon la répartition adoptée.

Dans toute la demande, on entend par zone de couverture une zone dans laquelle est accessible un service donné associé à un système de radiocommunications.

L'invention prend en compte un nombre quelconque de systèmes de radiocommunications de tout type lors de la modélisation d'allocations de bandes de fréquence par blocs tridimensionnels.

Les bandes de fréquence sont allouées selon l'invention aux systèmes de radiocommunications de manière à respecter la bande de fréquence totale disponible pour les systèmes de radiocommunications, et notamment minimiser la bande de fréquence totale allouée aux systèmes de radiocommunications.

Selon une autre caractéristique de l'invention, le procédé peut comprendre en outre autour de blocs modélisés de chaque répartition de blocs une construction de bulles de protection dans lesquelles les systèmes de radiocommunications sont aptes à ne pas subir d'interférence mutuelle au-delà de seuils de tolérance respectifs, le premier score étant attribué à chaque répartition de blocs en fonction en outre d'un nombre de collisions entre des bulles de protection et des blocs de la répartition.

Selon une autre caractéristique de l'invention, le procédé peut comprendre en outre autour de blocs modélisés de chaque répartition de blocs une construction de bulles de protection dans lesquelles les systèmes de radiocommunications sont aptes à ne pas subir d'interférence mutuelle au-delà de seuils de tolérance respectifs, un deuxième score étant attribué à chaque répartition de blocs en fonction d'un nombre de collisions entre des bulles de protection et des blocs de la répartition, et une répartition de blocs ayant des premier et deuxième scores supérieurs à des seuils respectifs étant adoptée.

L'invention adapte les allocations de bandes de fréquence de manière dynamique aux besoins des systèmes de radiocommunications, et de manière à respecter des seuils de tolérance sur des interférences entre les systèmes de radiocommunications.

Selon une autre caractéristique de l'invention, chaque bulle de protection peut être construite autour d'un bloc par rapport à un autre bloc en fonction des coordonnées spatiales des zones de couverture associées respectivement aux deux blocs et des caractéristiques de propagation des systèmes de radiocommunications associés aux deux blocs.

Deux systèmes de radiocommunications respectivement associés à deux blocs n'interfèrent pas entre eux au-delà de seuils de tolérance respectifs lorsque la bulle de protection autour d'un bloc est disjointe de l'autre bloc. Grâce aux bulles de protection autour des blocs modélisés, l'invention alloue de manière optimale des bandes de fréquence aux systèmes de radiocommunications associés aux blocs pour limiter les interférences entre les systèmes de radiocommunications.

Selon une autre caractéristique de l'invention, le procédé selon l'invention peut comprendre en outre, si aucune répartition de blocs n'a un score supérieur au seuil prédéterminé, une sélection de répartitions de blocs ayant les scores les plus élevés, un remplacement des répartitions non sélectionnées par des répartitions sélectionnées de manière à conserver un même nombre de répartitions, et une sélection aléatoire d'au moins une répartition de blocs et d'au moins un bloc de la répartition sélectionnée afin de modifier la position du bloc sélectionné en fonction de la fréquence. Le procédé selon l'invention peut comprendre également une sélection aléatoire de deux répartitions et d'au moins un système de radiocommunications, et une interversion des blocs associés à chaque système de radiocommunications sélectionné entre les deux répartitions sélectionnées.

La construction des bulles de protection, l'attribution d'un score et les sélections peuvent être itératives. A la suite des itérations, le procédé selon l'invention détermine une répartition de blocs optimale qui présente notamment un minimum d'interférences entre les systèmes de radiocommunications et une bande de fréquence totale allouée aux systèmes de radiocommunications qui est minimale.

L'invention concerne également un dispositif pour allouer des bandes de fréquence respectivement à des systèmes de radiocommunications, caractérisé en ce qu'il comprend :

- un moyen pour modéliser une allocation d'une bande de fréquence à chaque système de radiocommunications par au moins un bloc tridimensionnel en fonction d'une largeur de bande de fréquence et d'une zone de couverture du système de radiocommunications,
- un moyen pour déterminer au moins une répartition des blocs modélisés,
- un moyen pour attribuer un premier score à chaque répartition de blocs en fonction d'une bande de fréquence minimale incluant toutes les bandes de fréquence des blocs de la répartition, et
- un moyen pour adopter une répartition de blocs ayant un premier score supérieur à un seuil afin d'allouer des bandes de fréquence aux systèmes de radiocommunications selon la répartition adoptée.

L'invention se rapporte encore à un programme d'ordinateur apte à être mis en oeuvre dans un dispositif pour allouer des bandes de fréquence respectivement à des systèmes de radiocommunications, ledit programme comprenant des instructions qui, lorsque le programme est exécuté dans ledit dispositif, réalisent les étapes selon le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un bloc-diagramme schématique d'un dispositif d'allocation de bande de fréquence selon l'invention ;
- la figure 2 est un graphe montrant une variation d'une séparation entre deux bandes de fréquence utilisées respectivement par deux systèmes de radiocommunications en fonction d'une distance entre les zones de couverture des deux systèmes de radiocommunications ;
- la figure 3 est un diagramme dans un espace à trois dimensions montrant une modélisation d'allocation de bandes de fréquence à des systèmes de radiocommunications par des blocs délimités par des zones de couverture des systèmes de radiocommunications respectifs ; et
- la figure 4 est un algorithme d'un procédé d'allocation de bande de fréquence selon l'invention.

En référence à la figure 1, le dispositif d'allocation de bande de fréquence DAB selon l'invention comprend principalement une unité centrale UC, un module de modélisation MOD, un module d'évaluation EVA, un module de simulation SIM et une base de données BD.

Le procédé d'allocation de bande de fréquence selon l'invention est mis en oeuvre par exemple sous la forme d'un logiciel implémenté dans le dispositif d'allocation de bande de fréquence DAB, tel qu'un ordinateur personnel ou un serveur applicatif. Le dispositif DAB contient la base de données BD incluant notamment des données relatives à des systèmes de radiocommunications, telles que des largeurs de bande de fréquence requises pour des antennes de réseaux de radiocommunications et associées à l'identification des antennes et à des caractéristiques de propagation et des positions des antennes et des caractéristiques dimensionnelles de zones de couverture des antennes.

Dans une variante, la base de données BD est dans un serveur de base de données relié au dispositif DAB localement ou à distance au travers d'un réseau de télécommunications du type internet.

Le dispositif DAB peut communiquer avec des entités du réseau fixe d'au moins un réseau de radiocommunications cellulaire de type UMTS ("Universal Mobile Télécommunications System" en anglais) ou du type GSM ("Global System for Mobile communications" en anglais) adossé à un réseau GPRS ("General Packet Radio Service" en anglais). Les entités peuvent être un centre de maintenance OMC ("Opération and Maintenance Center" en anglais) et des interfaces terrestres entre des contrôleurs de station de base RNC ("Radio Network Controller" en anglais) pour un réseau de type UMTS afin que le dispositif DAB leur transmette rapidement des listes d'allocations de bande de fréquence selon l'invention.

Par exemple, le réseau de radiocommunications cellulaire est à accès multiple à répartition par codes CDMA ("Code Division Multiple Access" en anglais). Selon d'autres exemples, le réseau cellulaire est à accès multiple à répartition par codes à large bande WCDMA ("Wideband Code Division Multiple Access" en anglais) ou dispose de canaux de transport partagés descendants à débit élevé HSPDA ("High Speed Downlink Packet Access" en anglais).

Le dispositif DAB peut communiquer en outre avec des entités de service d'un réseau local sans fil du type WIFI ("Wireless Fidelity" en anglais), WIMAX ("World wide Interoperability Microwave Access" en anglais) ou WIBRO ("Wireless Broadland" en anglais), ou encore un réseau de proximité du type infrarouge ou Bluetooth.

De manière générale, le dispositif DAB est en liaison avec au moins deux entités de service gérant chacune un système de radiocommunications offrant par exemple un service fixe, un service mobile ou un service de radiodiffusion.

Un système de radiocommunications peut être restreint à une station de base dans un réseau de radiocommunications à laquelle une fréquence est à allouer, ou comprendre un ensemble de stations de base appartenant à un même réseau de radiocommunications auquel une bande de fréquence est à allouer. Dans ce dernier cas, l'opérateur du réseau de radiocommunications peut allouer lui-même à chaque station de base dudit ensemble une fréquence de la bande de fréquence allouée. Selon une autre variante, un système de radiocommunications peut être un réseau de radiocommunications auquel une bande de fréquence est à allouer.

La figure 2 est un graphe montrant des variations d'un écart $\Delta f$ entre des bandes de fréquence respectivement utilisées par deux systèmes de radiocommunications en fonction de la distance $\Delta d$ entre des zones respectivement couvertes par les deux systèmes de radiocommunications. La distance $\Delta d$ et l'écart $\Delta f$ appelé également "bande de garde" dépendent des systèmes de radiocommunications concernés et sont respectivement inférieurs à une distance maximale prédéterminée $\Delta dM$ et un écart maximal prédéterminé $\Delta fM$.

Les deux systèmes de radiocommunications n'interfèrent pas mutuellement s'ils utilisent respectivement des bandes de fréquence suffisamment séparées en fonction de la distance entre les zones de couverture des systèmes de radiocommunications. En particulier, les deux systèmes de radiocommunications n'interfèrent pas mutuellement s'ils utilisent respectivement des bandes de fréquence séparées d'au moins l'écart de fréquence maximal $\Delta fM$, ou si la distance entre les zones de couverture relatives aux systèmes de radiocommunications est supérieure à la distance maximale $\Delta dM$.

En général, chaque couple de deux systèmes de radiocommunications est associé à un graphe $\Delta f(\Delta d)$ qui est différent des graphes associés à d'autres couples de systèmes de radiocommunications et qui dépend des caractéristiques de propagation des systèmes de radiocommunications composant le couple.

Sur la figure 3 est illustrée une modélisation d'allocation de bande de fréquence par bloc tridimensionnel dans un repère de référence (Ox, Oy, Of). Les dimensions et les contours de zones de couverture de systèmes de radiocommunications sont définis à l'aide de coordonnées spatiales x et y selon deux axes horizontaux dans un plan terrestre de coordonnées. La troisième coordonnée f selon un axe vertical permet de définir des bandes de fréquence à allouer aux systèmes de radiocommunications. Une allocation d'une bande de fréquence à un système de radiocommunications est modélisée par le module de modélisation MOD du dispositif d'allocation de bande de fréquence DAB.

L'allocation d'une bande de fréquence à un système de radiocommunications est représentée par un bloc qui est un objet tridimensionnel sur la figure 3. Dans un exemple illustré à la figure 3, trois blocs tridimensionnels BL1, BL2 et BL3 sont représentés et respectivement associés à trois systèmes de radiocommunications différents.

La projection orthogonale d'un bloc associé à un système de radiocommunications sur le plan terrestre Ox, Oy correspond à une zone de couverture ZC du système de radiocommunications. La projection orthogonale du bloc sur l'axe vertical f correspond à une bande de fréquence (fm, fM) à allouer au système de radiocommunications.

Pour une zone de couverture donnée ZC1, plusieurs bandes de fréquence peuvent être allouées à un système de radiocommunications. Dans ce cas, plusieurs blocs associés au même système de radiocommunications sont juxtaposés parallèlement à l'axe Of.

La forme de la base d'un bloc dépend du système de radiocommunications associé au bloc. Par exemple, si le système de radiocommunications est une antenne omnidirectionnelle, la base a la forme d'un disque. Si le système de radiocommunications est une antenne directionnelle, la base a une forme de secteur circulaire.

Le module de modélisation MOD détermine une bulle de protection BP1 autour d'un bloc, qui illustre la limite de compatibilité en fréquence entre le système de radiocommunications associé au bloc et un autre système de radiocommunications.

La forme d'une bulle est définie pour un premier système de radiocommunications par rapport à un deuxième système de radiocommunications. La bulle délimite une région dans laquelle les premier et deuxième systèmes de radiocommunications sont aptes à ne pas subir d'interférence l'un par rapport à l'autre au-delà de seuils de tolérance respectifs.

La forme de la bulle de protection BP1 est construite en appliquant la courbe illustrée à la figure 2 au bloc BL1. Le bloc BL1 est agrandi latéralement parallèlement au plan terrestre Ox, Oy de la distance maximale $\Delta dM$ pour $\Delta f = 0$ et verticalement parallèlement à l'axe des fréquences de l'écart maximal $\Delta fM$ pour $\Delta d = 0$. Au

niveau des arêtes du bloc BL1, la bande de fréquence (f1m, f1M) est agrémentée de la variation de l'écart $\pm\Delta f$ en fonction de la variation de la distance $\pm\Delta d$ agrémentant les deux coordonnées x et y dans la zone de couverture ZC1 selon la courbe illustrée à la figure 2 afin de définir complètement la bulle tridimensionnelle BP1.

Par exemple sur la figure 3, si la bulle de protection BP1 autour du bloc BL1 est disjointe du bloc BL2, alors les deux systèmes de radiocommunications respectivement associées aux blocs BL1 et BL2 peuvent coexister.

Si la modélisation d'allocation de bande de fréquence prend en compte plus de deux systèmes de radiocommunications, au moins deux bulles de protection sont déterminées autour d'un bloc. Par exemple, si les trois systèmes de radiocommunications respectivement associés aux trois blocs BL1, BL2 et BL3 sont considérés pour l'allocation de bande de fréquence, alors deux bulles de protection sont déterminées autour du bloc BL1. Une première bulle de protection du bloc BL1 par rapport au bloc BL2 est déduite d'un premier graphe $\Delta f(\Delta d)$ associé à un couple de systèmes de radiocommunications ayant des caractéristiques de propagation similaires respectivement à ceux représentés par les blocs BL1 et BL2. Une deuxième bulle de protection du bloc BL1 par rapport au bloc BL3 est déduite d'un deuxième graphe $\Delta f(\Delta d)$ associé à un couple de systèmes de radiocommunications ayant des caractéristiques de propagation similaires respectivement à ceux représentés par les blocs BL1 et BL3. A titre d'exemple, une seule bulle de protection BP1 autour du bloc BL1 par rapport à l'un des blocs BL2 et BL3 est représentée sur la figure 3.

En référence à la figure 4, le procédé d'allocation de bande de fréquence selon l'invention comprend des étapes E1 à E10 exécutées sous le contrôle de l'unité centrale UC dans le dispositif d'allocation de bande de fréquence DAB.

A l'étape E1, le dispositif d'allocation de bande de fréquence DAB collecte des informations relatives aux cartographies des zones de couverture pour chaque système de radiocommunications dont l'opérateur souhaite bénéficier d'une allocation de bande de fréquence.

En outre, le dispositif DAB est informé des besoins en spectre pour chaque système de radiocommunications, c'est-à-dire d'une largeur de bande de fréquence requise par chaque système de radiocommunications.

Pour chaque système de radiocommunications, les informations collectées comprennent les coordonnées spatiales de la zone de couverture ZC du système de radiocommunications, ainsi que la largeur de bande de fréquence requise par le système de radiocommunications, et sont mémorisées dans la base de données BD.

A un point donné du plan terrestre peuvent coexister plusieurs systèmes de radiocommunications. En effet, une station de base peut comporter plusieurs antennes requérant chacune une largeur de bande de fréquence dans une bande de fréquence différente. Par exemple, une antenne requiert une largeur de bande de fréquence dans une bande de fréquence spécifique à un réseau de type UMTS et une autre antenne requiert une largeur de bande de fréquence dans une bande de fréquence spécifique à un réseau de type WIMAX.

A l'étape E2, le module de modélisation MOD analyse les informations mémorisées dans la base de données BD et modélise, pour chaque système de radiocommunications, une allocation d'une bande de fréquence (fm, fM) au système de radiocommunications par un bloc tridimensionnel BL en fonction de la largeur de bande de fréquence fM - fm requise par le système de radiocommunications et des dimensions et de la position de la zone de couverture ZC du système de radiocommunications. La largeur de la bande de fréquence à allouer à un système de radiocommunications est alors au moins égale à la largeur de bande de fréquence requise par le système de radiocommunications.

A l'étape E3, le module de modélisation MOD détermine une ou plusieurs répartitions REP des blocs modélisés BL en fonction de variation des limites fm et fM des bandes de fréquence à allouer qui dépendent des largeurs de bande de fréquence fM - fm requises pas les systèmes de radiocommunications associés aux blocs. Chaque répartition REP contient au moins autant de blocs qu'il y a de systèmes de radiocommunications. Pour chaque système de radiocommunications, le bloc modélisé BL ayant une hauteur égale à la largeur de bande de fréquence fM - fm requise par le système de radiocommunications a des positions dans le repère (Ox, Oy, Of) qui peuvent varier seulement selon l'axe des fréquences Of et qui sont associées aux répartitions REP, une position du bloc pouvant être associée à plusieurs répartitions REP.

Par exemple, pour chaque répartition de blocs REP, les blocs sont placés aléatoirement les uns par rapport aux autres selon l'axe des fréquences Of.

Dans un cas particulier, les répartitions des blocs sont déterminées de manière à ce qu'aucun bloc ne recouvre un autre bloc et à ce que toutes les bandes de fréquence à allouer aux systèmes de radiocommunications associés aux blocs soient contenues dans une bande de fréquence totale prédéterminée. Dans un autre exemple, une ou plusieurs répartitions de blocs contiennent au moins deux blocs qui ne sont pas disjoints. Par exemple, le module de modélisation MOD détermine un ensemble de R = 50 répartitions de blocs à optimiser au cours des étapes suivantes.

Les étapes suivantes E4 à E9 sont exécutées de manière itérative par le dispositif d'allocation de bande de fréquence DAB afin de déterminer une répartition de blocs optimale satisfaisant à des critères prédéterminés dépendant de grandeurs évaluées.

A une itération initiale iter $\equiv$ 0, le module de modélisation MOD construit des bulles de protection BP autour de blocs BL parmi les blocs modélisés pour chaque répartition de blocs REP, à l'étape E4. Chaque bulle de protection autour d'un premier bloc est construite par rapport à un deuxième bloc en fonction du graphe $\Delta f(\Delta d)$ associé à un couple de systèmes de radiocommunications ayant des caractéristiques de propagation similaires respectivement aux systèmes représentés par les premier et deuxième blocs.

Par exemple, pour chaque bloc, le module de modélisation MOD détermine autant de bulles de protection autour du bloc que de blocs modélisés excepté le bloc considéré. Ainsi, un bloc est entouré d'une bulle de protection par rapport à un autre bloc.

Selon un autre exemple, pour deux systèmes de radiocommunications considérés, une seule bulle de protection est déterminée autour de l'un des deux blocs. Dans ce cas, pour N systèmes de radiocommunications considérés, un nombre NB de bulles à déterminer autour de blocs d'indice i est donné par la relation suivante :

$$NB = N(N - 1)/2.$$

En variante, lorsque deux blocs sont séparés d'une distance supérieure à une distance prédéterminée, aucune bulle de protection n'est déterminée autour de l'un des blocs.

A l'étape E5, le module d'évaluation EVA attribue au moins un score SC à chaque répartition de blocs REP.

Par exemple, le score SC est attribué en fonction de la largeur de la bande de fréquence minimale incluant toutes les bandes de fréquence des blocs de la répartition. Le score attribué à la répartition est alors d'autant plus élevé que ladite bande de fréquence minimale est étroite.

En outre, le score SC peut dépendre également du nombre de collisions entre des bulles de protection et des blocs de la répartition. Ce score fournit une estimation de la qualité d'adaptation de la répartition de blocs aux contraintes prédéterminées. Le score attribué à la répartition est d'autant plus élevé que le nombre de collisions est faible.

Dans un autre exemple, à chaque répartition sont attribués un premier score en fonction de la largeur de la bande de fréquence minimale incluant toutes les bandes de fréquence des blocs d'une répartition et un deuxième score en fonction du nombre de collisions entre des bulles de protection et des blocs de la répartition.

En complément, le ou les scores dépendent en outre des préférences de certains systèmes de radiocommunications pour utiliser certaines bandes de fréquences et ne pas utiliser d'autres bandes de fréquences.

A l'étape E6, le module d'évaluation EVA compare le score SC attribué à chaque répartition de blocs à un seuil prédéterminé SP.

Si une répartition de blocs REP a un score SC supérieur au seuil prédéterminé SP, la répartition de blocs est adoptée par le module d'évaluation EVA afin d'allouer des bandes de fréquence aux systèmes de radiocommunications selon la répartition adoptée, à une étape E10. Si plusieurs répartitions de blocs REP ont un score supérieur au seuil prédéterminé, la répartition de blocs adoptée par exemple est celle ayant le score le plus élevé.

Si aucune répartition de blocs REP a un score SC supérieur au seuil prédéterminé SP, le procédé passe à l'étape E7.

En variante, dans le cas où plusieurs scores ont été attribués à chaque répartition à l'étape E5, le module d'évaluation EVA adopte la répartition de blocs ayant tous les scores supérieurs à des seuils prédéterminés respectifs.

A l'étape E7, le module de simulation SIM sélectionne K répartitions de blocs à garder ayant les scores les plus élevés parmi les R répartitions de blocs REP pour les étapes suivantes. Par exemple, K est compris entre R/2 et R. Les répartitions non sélectionnées sont supprimées et sont remplacées par certaines répartitions sélectionnées qui peuvent être dupliquées de manière à conserver un même nombre R de répartitions.

Par exemple, un ensemble de trois répartitions de blocs contient des première, deuxième et troisième répartitions auxquelles sont respectivement attribués des scores en ordre décroissant. Les première et deuxième répartitions sont sélectionnées et la troisième répartition est supprimée. La première répartition est alors dupliquée pour obtenir un autre ensemble de trois répartitions. La duplication d'au moins la répartition à laquelle est attribué le score le plus élevé garantit la conservation de cette répartition pour l'itération suivante.

A l'étape E8, le module de simulation SIM sélectionne aléatoirement au moins une répartition de blocs REP parmi les R répartitions issues de l'étape E7 et au moins un bloc BL de la répartition sélectionnée. Plusieurs blocs peuvent être sélectionnés par exemple s'ils ont les mêmes coordonnées spatiales. Le module SIM modifie alors la position du ou des blocs sélectionnés parallèlement à l'axe des fréquences Of et donc en fonction de la fréquence.

Par exemple, un ou plusieurs blocs sélectionnés sont déplacés verticalement, ce qui revient à allouer d'autres bandes de fréquence aux systèmes de radiocommunications.

Selon un autre exemple, au moins un bloc sélectionné est divisé en sous-blocs, ce qui revient à allouer plusieurs bandes de fréquence disjointes à un système de radiocommunications au lieu d'une seule bande de fréquence initialement plus étroite que l'ensemble des bandes de fréquence des sous-blocs.

A l'étape E9, le module de simulation SIM sélectionne aléatoirement deux répartitions de blocs REP parmi les R répartitions issues des étapes E7 et E8, et sélectionne au moins un système de radiocommunications.

Les blocs associés à chaque système de radiocommunications sélectionné sont intervertis entre les deux répartitions sélectionnées par le module SIM. Les deux répartitions ainsi obtenues sont dites croisées puisque chaque répartition comprend au moins un bloc placé selon l'autre répartition initiale.

Par exemple, deux répartitions sont sélectionnées. La première répartition comprend trois blocs "A1", "A2" et "A3" associés respectivement à des systèmes de radiocommunications "S1", "S2" et "S3". La deuxième répartition comprend trois blocs "B1", "B2" et "B3" associés respectivement aux systèmes de radiocommunications "S1", "S2" et "S3". Si les systèmes de radiocommunications "S1" et "S2" sont sélectionnés, les deux répartitions obtenues après croisement comprennent respectivement les trois blocs "B1", "B2" et "A3" et les trois blocs "A1", "A2" et "B3".

Eventuellement, une répartition de blocs obtenue après croisement peut comprendre des blocs qui se recouvrent. Dans ce cas, cette répartition présentant une perturbation mutuelle entre les systèmes de radiocommunications représentés par les blocs se recouvrant et donc présentant un faible score ne sera pas sélectionnée à l'étape E7 de l'itération suivante et sera donc supprimée.

A l'issue de l'étape E9, le procédé passe de nouveau à l'étape E4 pour l'itération suivante.

Les étapes E7 à E9 décrites précédemment correspondent à une réalisation particulière d'un algorithme génétique qui est lui-même un type particulier d'algorithme d'optimisation.

En variante, les étapes E7 à E9 peuvent être remplacées par des étapes d'un autre algorithme d'optimisation, par exemple de type "recuit simulé".

Lorsque le nombre d'itérations iter atteint un nombre prédéterminé d'itérations NP et aucune répartition de blocs REP n'a un score SC supérieur ou égal au seuil prédéterminé SP à une étape E67 intermédiaire entre les étapes E6 et E7, le dispositif d'allocation de bande de fréquence DAB requiert auprès des opérateurs des systèmes de radiocommunications une modification des besoins en spectre et/ou des zones de couverture des systèmes de radiocommunications.

Dans ce cas, le procédé peut passer de nouveau à l'étape E1 afin de déterminer des répartitions de blocs à adopter.

Dans une variante, à l'étape E4, au cours des itérations succédant à l'itération initiale, seules les bulles de protection autour de blocs qui ont été modifiés aux étapes E8 et E9 sont déterminées à nouveau.

L'invention décrite ici concerne un procédé et un dispositif pour allouer des bandes de fréquence respectivement à des systèmes de radiocommunications. Selon une implémentation, les étapes du procédé de l'invention sont déterminées par les instructions d'un programme d'ordinateur incorporé dans le dispositif d'allocation de bande de fréquence selon l'invention. Le programme comporte des instructions de programme qui, lorsque ledit programme est exécuté dans le dispositif dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement peut être un circuit intégré dans lequel le programme est incorporé, le circuit étant adapté pour exécuter ou pour être utilisé dans l'exécution du procédé selon l'invention.

## Revendications

**1.** Procédé pour allouer des bandes de fréquence respectivement à des systèmes de radiocommunications, **caractérisé en ce qu'**il comprend :

> une modélisation (E2) d'une allocation d'une bande de fréquence à chaque système de radiocommunications par au moins un bloc tridimensionnel (BL) en fonction d'une largeur de bande de fréquence et d'une zone de couverture du système de radiocommunications,
> une détermination (E3) d'au moins une répartition (REP) des blocs modélisés (BL),
> une attribution (E5) d'un premier score à chaque répartition de blocs en fonction d'une bande de fréquence minimale incluant toutes les bandes de fréquence des blocs de la répartition, et
> une adoption (E10) d'une répartition de blocs ayant un premier score supérieur à un seuil afin d'allouer des bandes de fréquence aux systèmes de radiocommunications selon la répartition adoptée.

**2.** Procédé conforme à la revendication 1, comprenant autour de blocs modélisés de chaque répartition de blocs une construction (E4) de bulles de protection (BP) dans lesquelles les systèmes de radiocommunications sont aptes à ne pas subir d'interférence mutuelle au-delà de seuils de tolérance respectifs, le premier score étant attribué à chaque répartition de blocs (REP) en fonction en outre d'un nombre de collisions entre des bulles de protection et des blocs de la répartition.

**3.** Procédé conforme à la revendication 1, comprenant autour de blocs modélisés de chaque répartition de blocs une construction (E4) de bulles de protection (BP) dans lesquelles les systèmes de radiocommunications sont aptes à ne pas subir d'interférence mutuelle au-delà de seuils de tolérance respectifs, un deuxième score étant attribué à chaque répartition de blocs en fonction d'un nombre de collisions entre des bulles de protection et des blocs de la répartition, et une répartition de blocs ayant des premier et deuxième scores supérieurs à des seuils respectifs étant adoptée.

**4.** Procédé conforme à la revendication 2 ou 3, selon lequel chaque bulle de protection (BP) est construite autour d'un bloc par rapport à un autre bloc en fonction des coordonnées spatiales des zones de couverture associées respectivement aux deux blocs et des caractéristiques de propagation des systèmes de radiocommunications associés aux deux blocs.

**5.** Procédé conforme à la revendication 1 ou 2, comprenant en outre, si aucune répartition de blocs (REP) n'a un score (SC) supérieur au seuil prédéterminé :

une sélection (E7) de répartitions de blocs (REP) ayant les scores les plus élevés,
un remplacement (E7) des répartitions non sélectionnées par des répartitions sélectionnées de manière à conserver un même nombre de répartitions, et
une sélection aléatoire (E8) d'au moins une répartition de blocs et d'au moins un bloc (BL) de la répartition sélectionnée afin de modifier la position du bloc sélectionné en fonction de la fréquence.

**6.** Procédé conforme à la revendication 5, comprenant en outre une sélection aléatoire (E9) de deux répartitions de blocs (REP) et d'au moins un système de radiocommunications, et une interversion (E9) des blocs associés à chaque système de radiocommunications sélectionné entre les deux répartitions sélectionnées.

**7.** Procédé conforme à la revendication 5 ou 6, selon lequel la construction (E4) des bulles de protection, l'attribution (E5) d'un score et les sélections (E7, E8, E9) sont itératives.

**8.** Dispositif (DAB) pour allouer des bandes de fréquence respectivement à des systèmes de radiocommunications, **caractérisé en ce qu'**il comprend :

- un moyen (MOD) pour modéliser une allocation d'une bande de fréquence à chaque système de radiocommunications par au moins un bloc tridimensionnel (BL) en fonction d'une largeur de bande de fréquence et d'une zone de couverture du système de radiocommunications,
- un moyen (MOD) pour déterminer au moins une répartition (REP) des blocs modélisés (BL),
- un moyen (EVA) pour attribuer un premier score (SC) à chaque répartition de blocs en fonction d'une bande de fréquence minimale incluant toutes les bandes de fréquence des blocs de la répartition, et
- un moyen (EVA) pour adopter une répartition de blocs ayant un premier score supérieur à un seuil afin d'allouer des bandes de fréquence aux systèmes de radiocommunications selon la répartition adoptée.

**9.** Programme d'ordinateur apte à être mis en oeuvre dans un dispositif (DAB) pour allouer des bandes de fréquence respectivement à des systèmes de radiocommunications, ledit programme étant **caractérisé en ce qu'**il comprend des instructions qui, lorsque le programme est chargé et exécuté dans ledit dispositif, réalisent les étapes de :

modéliser (E2) une allocation d'une bande de fréquence à chaque système de radiocommunications par au moins un bloc tridimensionnel (BL) en fonction d'une largeur de bande de fréquence et d'une zone de couverture du système de radiocommunications,
déterminer (E3) au moins une répartition (REP) des blocs modélisés (BL),
attribuer (E5) un premier score à chaque répartition de blocs en fonction d'une bande de fréquence minimale incluant toutes les bandes de fréquence des blocs de la répartition, et
adopter (E10) une répartition de blocs ayant un premier score supérieur à un seuil afin d'allouer des bandes de fréquence aux systèmes de radiocommunications selon la répartition adoptée.

**10.** Support d'enregistrement lisible par un dispositif de traitements de données pour allouer des bandes de fréquence respectivement à des systèmes de radiocommunications, **caractérisé en ce qu'**il a enregistré un programme d'ordinateur comportant des instructions pour l'exécution des étapes de :

modéliser (E2) une allocation d'une bande de fréquence à chaque système de radiocommunications par au moins un bloc tridimensionnel (BL) en fonction d'une largeur de bande de fréquence et d'une zone de couverture du système de radiocommunications,
déterminer (E3) au moins une répartition (REP) des blocs modélisés (BL),
attribuer (E5) un premier score à chaque répartition de blocs en fonction d'une bande de fréquence minimale incluant toutes les bandes de fréquence des blocs de la répartition, et
adopter (E10) une répartition de blocs ayant un premier score supérieur à un seuil afin d'allouer des bandes de fréquence aux systèmes de radiocommunications selon la répartition adoptée.

**Patentansprüche**

1. Verfahren zum Zuteilen jeweiliger Frequenzbänder zu Funkkommunikationssystemen, **dadurch gekennzeichnet, dass** es umfasst:

   eine Modellierung (E2) einer Zuteilung eines Frequenzbandes zu jedem Funkkommunikationssystem durch wenigstens einen dreidimensionalen Block (BL) in Abhängigkeit von einer Frequenzbandbreite und von einem Versorgungsbereich des Funkkommunikationssystems,
   eine Bestimmung (E3) wenigstens einer Verteilung (REP) der modellierten Blöcke (BL),
   eine Zuweisung (E5) eines ersten Punktwertes zu jeder Verteilung von Blöcken in Abhängigkeit von einem minimalen Frequenzband, das alle Frequenzbänder der Blöcke der Verteilung enthält, und
   eine Wahl (E10) einer Verteilung von Blöcken mit einem ersten Punktwert, der größer als ein Schwellenwert ist, um den Funkkommunikationssystemen gemäß der gewählten Verteilung Frequenzbänder zuzuteilen.

2. Verfahren nach Anspruch 1, welches um modellierte Blöcke jeder Verteilung von Blöcken herum eine Konstruktion (E4) von Schutzblasen (BP) umfasst, in denen die Funkkommunikationssysteme so beschaffen sind, dass sie keine gegenseitige Beeinflussung über jeweilige Toleranzschwellenwerte hinaus erfahren, wobei der erste Punktwert jeder Verteilung von Blöcken (REP) außerdem in Abhängigkeit von einer Anzahl von Kollisionen zwischen Schutzblasen und Blöcken der Verteilung zugewiesen wird.

3. Verfahren nach Anspruch 1, welches um modellierte Blöcke jeder Verteilung von Blöcken herum eine Konstruktion (E4) von Schutzblasen (BP) umfasst, in denen die Funkkommunikationssysteme so beschaffen sind, dass sie keine gegenseitige Beeinflussung über jeweilige Toleranzschwellenwerte hinaus erfahren, wobei ein zweiter Punktwert jeder Verteilung von Blöcken in Abhängigkeit von einer Anzahl von Kollisionen zwischen Schutzblasen und Blöcken der Verteilung zugewiesen wird und eine Verteilung von Blöcken gewählt wird, die einen ersten und einen zweiten Punktwert aufweist, die größer als jeweilige Schwellenwerte sind.

4. Verfahren nach Anspruch 2 oder 3, wobei jede Schutzblase (BP) um einen Block herum in Bezug auf einen anderen Block in Abhängigkeit von den räumlichen Koordinaten der Versorgungsbereiche, die den zwei Blöcken jeweils zugeordnet sind, und von den Ausbreitungseigenschaften der Funkkommunikationssysteme, die den zwei Blöcken zugeordnet sind, konstruiert wird.

5. Verfahren nach Anspruch 1 oder 2, welches außerdem umfasst, falls keine Verteilung von Blöcken (REP) einen Punktwert (SC) aufweist, der größer als der vorbestimmte Schwellenwert ist:

   eine Auswahl (E7) von Verteilungen von Blöcken (REP), welche die höchsten Punktwerte aufweisen,
   ein Ersetzen (E7) der nicht ausgewählten Verteilungen durch ausgewählte Verteilungen, derart, dass die Anzahl von Verteilungen gleich bleibt, und
   eine zufällige Auswahl (E8) wenigstens einer Verteilung von Blöcken und wenigstens eines Blockes (BL) der ausgewählten Verteilung, um die Position des ausgewählten Blockes in Abhängigkeit von der Frequenz zu modifizieren.

6. Verfahren nach Anspruch 5, welches außerdem eine zufällige Auswahl (E9) von zwei Verteilungen von Blöcken (REP) und wenigstens eines Funkkommunikationssystems sowie eine Vertauschung (E9) der jedem ausgewählten Funkkommunikationssystem zugeordneten Blöcke zwischen den zwei ausgewählten Verteilungen umfasst.

7. Verfahren nach Anspruch 5 oder 6, gemäß dem die Konstruktion (E4) der Schutzblasen, die Zuweisung (E5) eines Punktwertes und die Auswahlen (E7, E8, E9) iterativ sind.

8. Vorrichtung (DAB) zum Zuteilen jeweiliger Frequenzbänder zu Funkkommunikationssystemen, **dadurch gekennzeichnet, dass** sie umfasst:

   - ein Mittel (MOD) zum Modellieren einer Zuteilung eines Frequenzbandes zu jedem Funkkommunikationssystem durch wenigstens einen dreidimensionalen Block (BL) in Abhängigkeit von einer Frequenzbandbreite und von einem Versorgungsbereich des Funkkommunikationssystems,
- ein Mittel (MOD) zum Bestimmen wenigstens einer Verteilung (REP) der modellierten Blöcke (BL),
- ein Mittel (EVA) zum Zuweisen eines ersten Punktwertes (SC) zu jeder Verteilung von Blöcken in Abhängigkeit von einem minimalen Frequenzband, das alle Frequenzbänder der Blöcke der Verteilung enthält, und
- ein Mittel (EVA) zum Wählen einer Verteilung von Blöcken mit einem ersten Punktwert, der größer als ein Schwellenwert ist, um den Funkkommunikationssystemen gemäß der gewählten Verteilung Frequenzbänder zuzuteilen.

**9.** Computerprogramm, das geeignet ist, in einer Vorrichtung (DAB) zum Zuteilen jeweiliger Frequenzbänder zu Funkkommunikationssystemen ausgeführt zu werden, wobei das Programm **dadurch gekennzeichnet ist, dass** es Anweisungen umfasst, die, wenn das Programm in die Vorrichtung geladen und in ihr ausgeführt wird, die Ausführung folgender Schritte bewirken:

Modellieren (E2) einer Zuteilung eines Frequenzbandes zu jedem Funkkommunikationssystem durch wenigstens einen dreidimensionalen Block (BL) in Abhängigkeit von einer Frequenzbandbreite und von einem Versorgungsbereich des Funkkommunikationssystems,
Bestimmen (E3) wenigstens einer Verteilung (REP) der modellierten Blöcke (BL),
Zuweisen (E5) eines ersten Punktwertes zu jeder Verteilung von Blöcken in Abhängigkeit von einem minimalen Frequenzband, das alle Frequenzbänder der Blöcke der Verteilung enthält, und
Wählen (E10) einer Verteilung von Blöcken mit einem ersten Punktwert, der größer als ein Schwellenwert ist, um den Funkkommunikationssystemen gemäß der gewählten Verteilung Frequenzbänder zuzuteilen.

**10.** Aufzeichnungsmedium, das von einer Datenverarbeitungsvorrichtung zum Zuteilen jeweiliger Frequenzbänder zu Funkkommunikationssystemen gelesen werden kann, **dadurch gekennzeichnet, dass** auf ihm ein Computerprogramm aufgezeichnet ist, das Anweisungen zur Ausführung der folgenden Schritte umfasst:

Modellieren (E2) einer Zuteilung eines Frequenzbandes zu jedem Funkkommunikationssystem durch wenigstens einen dreidimensionalen Block (BL) in Abhängigkeit von einer Frequenzbandbreite und von einem Versorgungsbereich des Funkkommunikationssystems,
Bestimmen (E3) wenigstens einer Verteilung (REP) der modellierten Blöcke (BL),
Zuweisen (E5) eines ersten Punktwertes zu jeder Verteilung von Blöcken in Abhängigkeit von einem minimalen Frequenzband, das alle Frequenzbänder der Blöcke der Verteilung enthält, und
Wählen (E10) einer Verteilung von Blöcken mit einem ersten Punktwert, der größer als ein Schwellenwert ist, um den Funkkommunikationssystemen gemäß der gewählten Verteilung Frequenzbänder zuzuteilen.

## Claims

**1.** Method for allocating frequency bands to respective radio communication systems, **characterized in that** it comprises:

modelling (E2) allocation of a frequency band to each radio communication system by at least one three-dimensional block (BL) as a function of a frequency bandwidth and a coverage area of the radio communication system,
determining (E3) at least one distribution (REP) of the modelled blocks (BL),
assigning (E5) a first score to each block distribution as a function of a minimum frequency band including all the frequency bands of the blocks of the distribution, and
adopting (E10) a block distribution having a first score above a threshold in order to allocate frequency bands to the radio communication systems in accordance with the distribution adopted.

**2.** Method according to Claim 1, comprising the construction (E4), around modelled blocks of each block distribution, of protection bubbles (BP) in which the radio communication systems are able not to suffer mutual interference above respective tolerance thresholds, the first score being assigned to each block distribution (REP) also as a function of a number of collisions between protection bubbles and blocks of the distribution.

**3.** Method according to Claim 1, comprising the construction (E4), around modelled blocks of each block distribution, of protection bubbles (BP) in which the radio communication systems are able not to suffer mutual interference above respective tolerance thresholds, a second score being assigned to each block distribution as a function of a number of collisions between protection bubbles and blocks of the distribution, and a block distribution being adopted that has first and second scores above respective thresholds.

**4.** Method according to Claim 2 or 3, wherein each protection bubble (BP) is constructed around a block relative to another block as a function of the spatial coordinates of the respective coverage areas associated with the two blocks and propagation characteristics of the radio communication systems associated with the two blocks.

**5.** Method according to Claim 1 or 2, also comprising, if no block distribution (REP) has a score (SC) above the predetermined threshold:

selection (E7) of block distributions (REP) having the highest scores,
replacement (E7) of the non-selected distributions by selected distributions in such a manner as to preserve the same number of distributions, and
random selection (E8) of at least one block distribution and at least one block (BL) from the selected distribution in order to modify the position of the selected block as a function of frequency.

**6.** Method according to Claim 5, also comprising random selection (E9) of two block distributions (REP) and at least one radio communication system, and interchanging (E9) of the blocks associated with each selected radio communication system between the two selected distributions.

**7.** Method according to Claim 5 or 6, wherein the construction (E4) of the protection bubbles, the assignment (E5) of a score and the selections (E7, E8, E9) are iterative.

**8.** Device (DAB) for allocating frequency bands to respective radio communication systems, **characterized in that** it comprises:

- means (MOD) for modelling allocation of a frequency band to each radio communication system by at least one three-dimensional block (BL) as a function of a frequency bandwidth and a coverage area of the radio communication system,
- means (MOD) for determining at least one distribution (REP) of the modelled blocks (BL),
- means (EVA) for assigning a first score (SC) to each block distribution as a function of a minimum frequency band including all the frequency bands of the blocks of the distribution, and
- means (EVA) for adopting a block distribution having a first score above a threshold in order to allocate frequency bands to the radio communication systems in accordance with the distribution adopted.

**9.** Computer program able to be implemented in a device (DAB) for allocating frequency bands to respective radio communication systems, said program being **characterized in that** it comprises instructions that, when the program is loaded and executed in said device, perform the steps of:

modelling (E2) allocation of a frequency band to each radio communication system by at least one three-dimensional block (BL) as a function of a frequency bandwidth and a coverage area of the radio communication system,
determining (E3) at least one distribution (REP) of the modelled blocks (BL),
assigning (E5) a first score to each block distribution as a function of a minimum frequency band including all the frequency bands of the blocks of the distribution, and
adopting (E10) a block distribution having a first score above a threshold in order to allocate frequency bands to the radio communication systems in accordance with the distribution adopted.

**10.** Recording medium able to be read by a data processing device for allocating frequency bands to respective radio communication systems, **characterized in that** it has recorded a computer program including instructions for executing the steps of:

modelling (E2) allocation of a frequency band to each radio communication system by at least one three-dimensional block (BL) as a function of a frequency bandwidth and a coverage area of the radio communication system,
determining (E3) at least one distribution (REP) of the modelled blocks (BL),
assigning (E5) a first score to each block distribution as a function of a minimum frequency band including all the frequency bands of the blocks of the distribution, and
adopting (E10) a block distribution having a first score above a threshold in order to allocate frequency bands to the radio communication systems in accordance with the distribution adopted.

FIG. 1

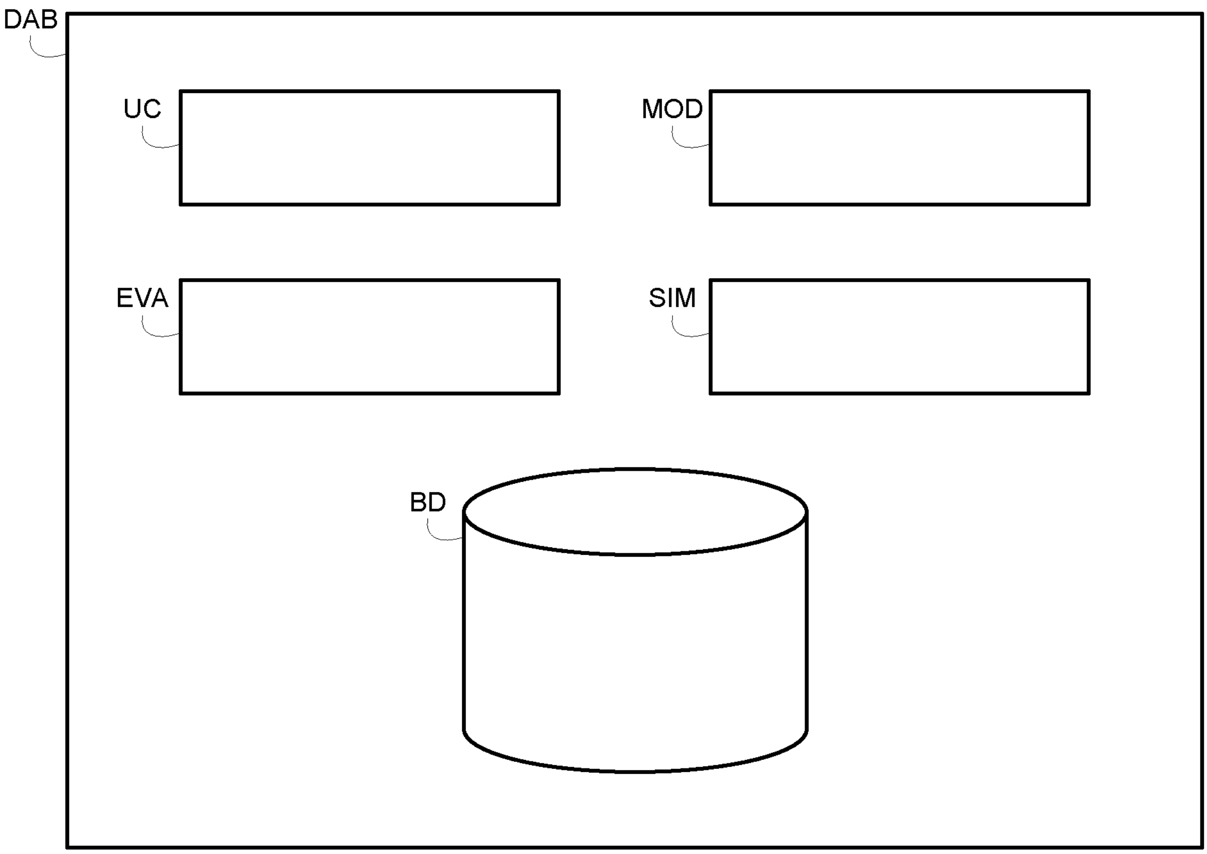

FIG. 2

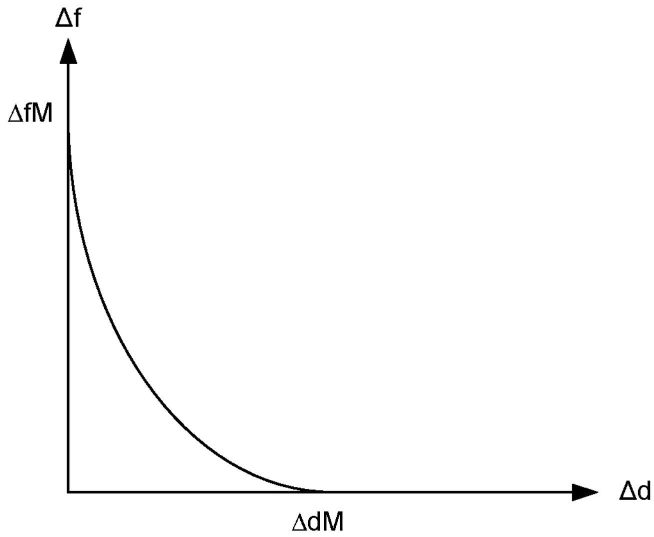


FIG. 3

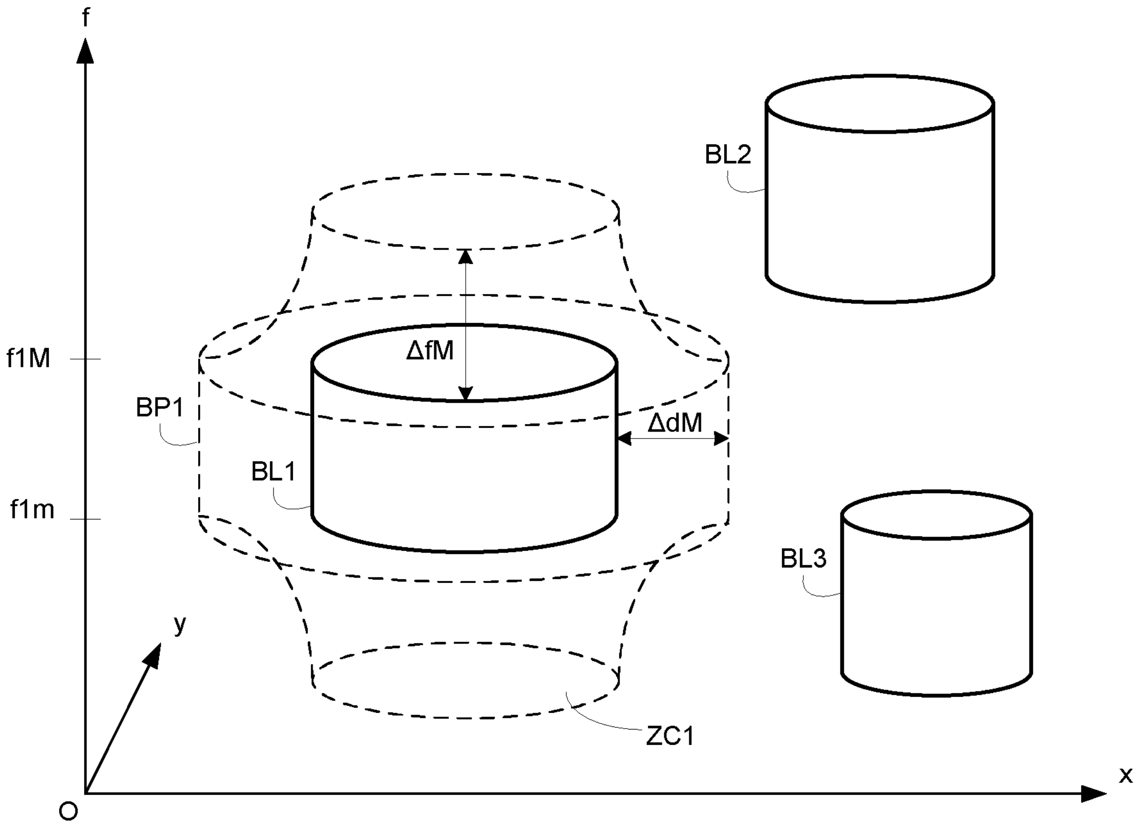

FIG. 4

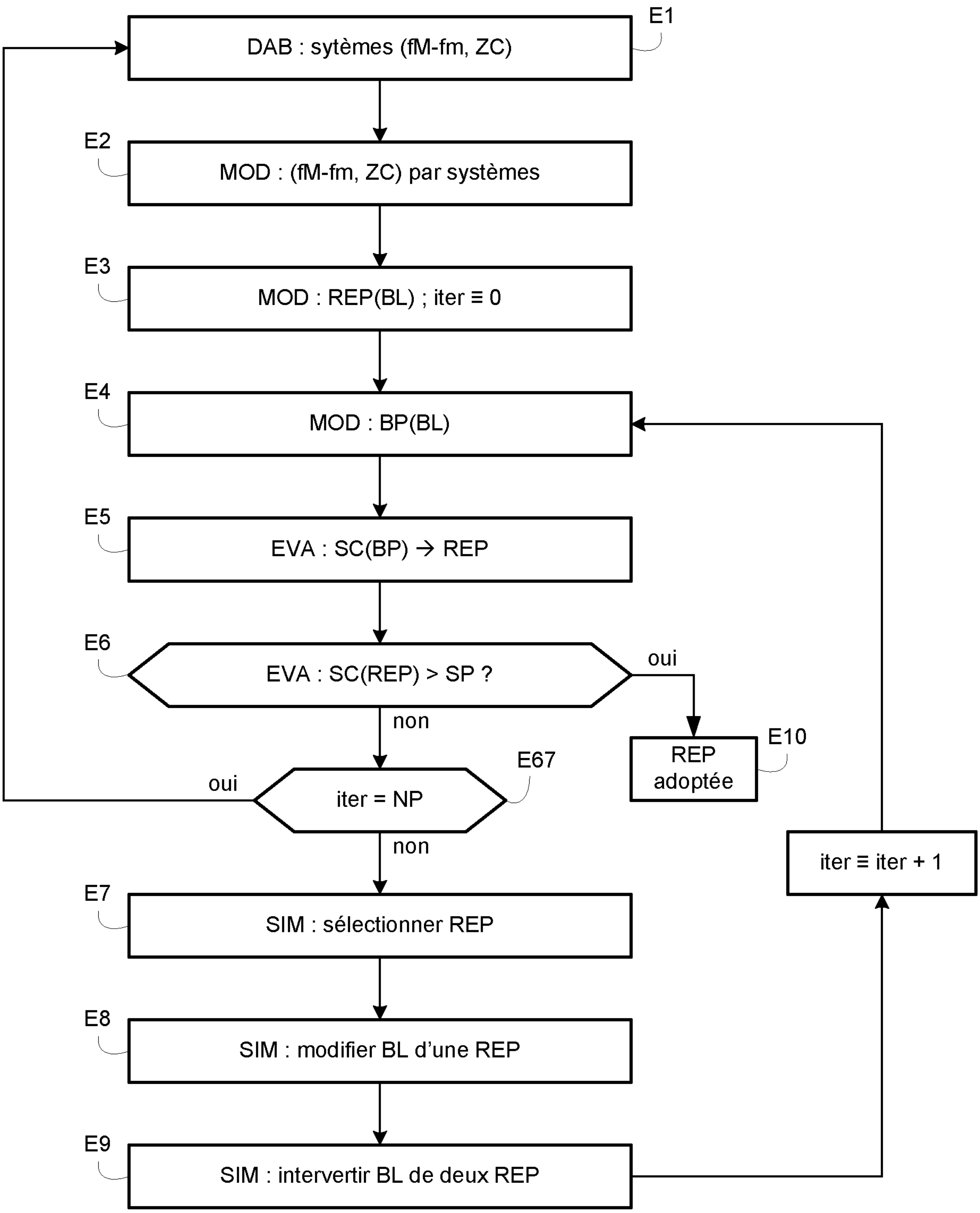
E1
DAB : sytèmes (fM-fm, ZC)
E2
MOD : (fM-fm, ZC) par systèmes
E3
MOD : REP(BL) ; iter ≡ 0
E4
MOD : BP(BL)
E5
EVA : SC(BP) → REP
E6
EVA : SC(REP) > SP ?
oui
non
REP adoptée
E10
E67
oui
iter = NP
non
iter ≡ iter + 1
E7
SIM : sélectionner REP
E8
SIM : modifier BL d'une REP
E9
SIM : intervertir BL de deux REP

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0847213 A